# EUROPEAN PATENT APPLICATION

(11) **EP 4 458 528 A1**
(43) Date of publication of application: **06.11.2024**
(21) Application number: 22915799.5
(22) Date of filing: 19.12.2022
(51) Int. Cl.: B25J 13/08, G06T 7/00

(54) **OBJECT DETECTION DEVICE, ROBOT SYSTEM, AND OBJECT DETECTION PROGRAM**

(30) Priority: 29.12.2021 JP 2021215451
(71) Applicant: KAWASAKI JUKOGYO KABUSHIKI KAISHA, Kobe-shi, Hyogo 650-8670 (JP)
(72) Inventor: Xu, Tianfen, Kobe-shi, Hyogo 650-8670 (JP); ONO, Seita, Kobe-shi, Hyogo 650-8670 (JP); MATSUDA, Kippei, Kobe-shi, Hyogo 650-8670 (JP)
(74) Representative: Müller-Boré & Partner Patentanwälte PartG mbB
(86) International application number: PCT/JP2022/046676
(87) International publication number: WO 2023/127575

(57) **Abstract**

A controller 3 includes: a first detector 41 that detects a target Wt from an image P including objects W, by using a detection model 44 trained by machine learning; a setter 42 that sets, as a search area A, an area that includes the target Wt detected by the first detector 41 from the image P and is larger than the target Wt; and a second detector 43 that detects the target Wt by performing a matching process based on the search area A of the image P.

## Description

### FIELD

The technique disclosed here relates to an object detector, a robot system, and an object detection program.

### BACKGROUND

An object detector that detects an object included in an image has been known to date. Patent Document 1, for example, discloses a device that detects a position of a target by performing a template matching process based on an image.

### CITATION LIST

### PATENT DOCUMENT

Patent Document 1: Japanese Patent Application Publication No. 2018-126799

### SUMMARY

In object detection as described above, when the number of objects included in the image increases, difficulty in the detection increases. For example, there might arise problems such as an increased time for detection, erroneous detection, and detection failures.

It is therefore an object of the technique disclosed here to appropriately detect an object included in an image.

An object detector disclosed here includes: a first detector that detects a target from an image including objects, by using a detection model trained by machine learning; a setter that sets, as a search area, an area that includes the target detected by the first detector from the image and is larger than the target; and a second detector that detects the target by performing a matching process based on the search area of the image.

A robot system disclosed here includes: the object detector; a robot; and a robot controller that controls the robot such that the robot applies a treatment to the target detected by the object detector.

An object detection program disclosed here causes a computer to perform the functions of: detecting a target from an image including objects, by using a detection model trained by machine learning; setting, as a search area, an area that includes the target detected by using the detection model from the image and is larger than the target; and detecting the target by performing a matching process based on the search area of the image.

The object detector can appropriately detect an object included in an image.

The robot system can appropriately detect an object included in an image.

The object detection program can appropriately detect an object included in an image.

### BRIEF DESCRIPTION OF THE DRAWINGS

[FIG. 1] FIG. 1 is a schematic view illustrating a configuration of a robot system.
[FIG. 2] FIG. 2 illustrates a schematic hardware configuration of a controller.
[FIG. 3] FIG. 3 is a functional block diagram illustrating a configuration of a control system of a processor.
[FIG. 4] FIG. 4 is a further detailed functional block diagram of an object detector.
[FIG. 5] FIG. 5 is a flowchart of object detection.
[FIG. 6] FIG. 6 shows an example of an image including corrugated boxes.
[FIG. 7] FIG. 7 shows an example of three-dimensional information including corrugated boxes.
[FIG. 8] FIG. 8 shows an example of three-dimensional information in which a representative portion is specified.
[FIG. 9] FIG. 9 shows an example of an image in which a target model is created.
[FIG. 10] FIG. 10 shows an example of an image in which a search area is created.
[FIG. 11] FIG. 11 is a block diagram of a robot system according to a variation.
[FIG. 12] FIG. 12 is a flowchart of object detection according to a variation.

### DESCRIPTION OF EMBODIMENTS

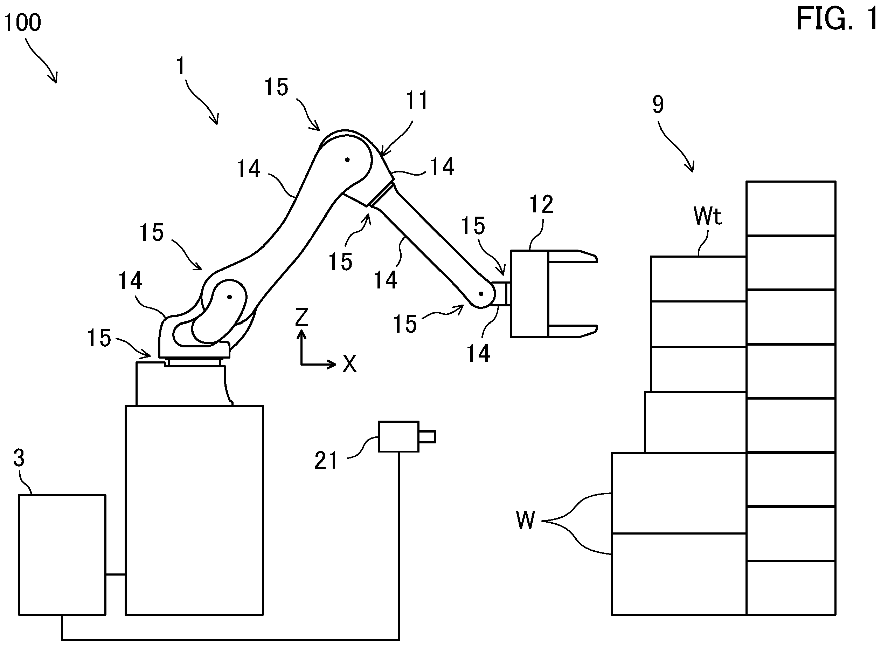

An exemplary embodiment will be described in detail hereinafter with reference to the drawings. FIG. 1 is a schematic view illustrating a configuration of a robot system 100.

The robot system 100 includes a robot 1 and a robot controller (hereinafter also referred to as a "controller") 3. The controller 3 controls the robot 1 such that the robot 1 detects a target Wt from an image including objects W and applies a treatment to the target Wt. In this example, the robot system 100 selects the target Wt from the image including the objects W placed in an object storage 9 and causes the robot 1 to convey the target Wt. The objects W are, for example, corrugated boxes. In the object storage 9, corrugated boxes having various outer shapes (e.g., shapes and sizes) are stacked. The robot system 100 selects a target corrugated box from the corrugated boxes and causes the robot 1 to convey the target corrugated box.

The robot system 100 may further include a three-dimensional camera 21. The three-dimensional camera 21 acquires both a two-dimensional image and three-dimensional information of the objects W. For example, the three-dimensional camera 21 acquires three-dimensional information in a stereo manner. Thus, the three-dimensional camera 21 can also capture the two-dimensional image together with the three-dimensional information. The three-dimensional camera 21 acquires point group data as three-dimensional information. The two-dimensional image and the three-dimensional information acquired by the three-dimensional camera 21 correspond to each other. For example, when a position in the three-dimensional information is specified, a position in the two-dimensional image is specified accordingly.

The three-dimensional camera 21 is located at a position at which the three-dimensional camera 21 can acquire a two-dimensional image and three-dimensional information of the objects W in the object storage 9. The three-dimensional camera 21 outputs the acquired two-dimensional image and three-dimensional information to the controller 3. The two-dimensional image will be hereinafter simply referred to as an "image."

The robot 1 includes a robot arm 11 and a hand 12. The hand 12 is located at a distal end of the robot arm 11. The robot 1 is, for example, an industrial robot. The robot 1 moves the hand 12 by moving the robot arm 11. Movement of the robot arm 11 includes deformation of the robot arm 11. The hand 12 can hold an object W. In the space where the robot 1 is disposed, a robot coordinate system of three orthogonal axes is defined. For example, a Z axis is defined in the top-bottom directions, and an X axis and a Y axis are defined to be orthogonal to each other in the horizontal directions.

The robot arm 11 moves in three dimensions. In this example, the robot arm 11 is a vertical articulated robot arm. The robot arm 11 includes links 14 and joints 15 connecting the links 14. The hand 12 is coupled to the links 14 at the front end of the robot arm 11. The robot arm 11 includes servo motors that rotationally drive the joints.

The hand 12 is an end effector attached to the robot arm 11. The hand 12 includes fingers that are opened and closed in predetermined opening/closing directions. The hand 12 includes actuators that drive the fingers.

The controller 3 receives an image and three-dimensional information from the three-dimensional camera 21. The controller 3 controls the robot 1, specifically, the servo motors of the robot arm 11 and the actuators of the hand 12. For example, the controller 3 detects a target Wt from an image including objects W and specifies a position of the target Wt. The controller 3 moves the robot arm 11 and causes the hand 12 to hold the target Wt. Then, the controller 3 moves the robot arm 11 and conveys the target Wt to a predetermined position. The controller 3 is an example of an object detector. That is, the controller 3 is an example in which a robot controller and an object detector are integrated.

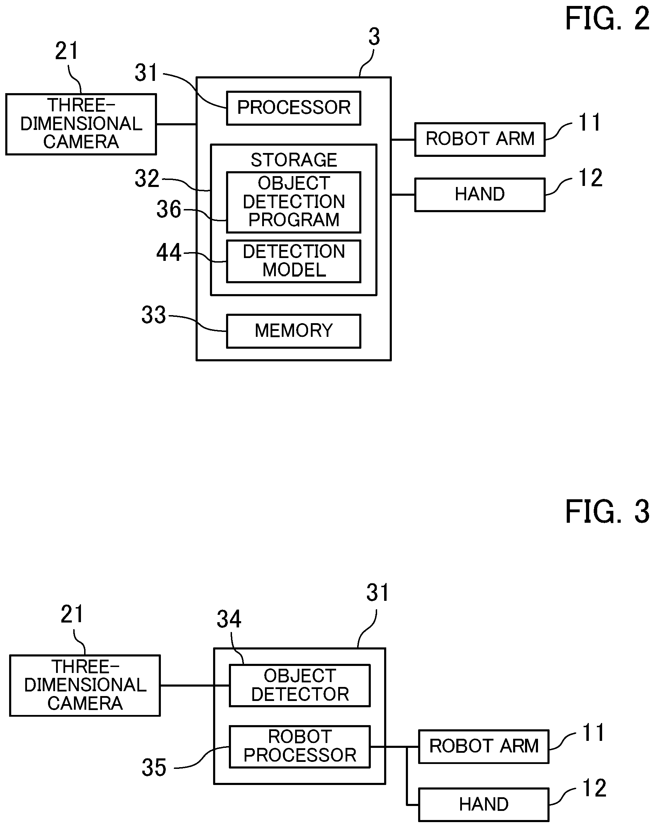

FIG. 2 illustrates a schematic hardware configuration of the controller 3. The controller 3 includes a processor 31, a storage 32, and a memory 33.

The processor 31 controls the entire control device 3. The processor 31 performs various computations. For example, the processor 31 is a processor such as a central processing unit (CPU). The processor 31 may be a micro controller unit (MCU), a micro processor unit (MPU), a field programmable gate array (FPGA), a programmable logic controller (PLC), system LSI, or the like.

The storage 32 stores programs and various types of data to be executed by the processor 31. For example, the storage 32 stores an object detection program 36. The storage 32 is a nonvolatile memory, a hard disc drive (HDD), or a solid state drive (SSD), for example.

FIG. 3 is a functional block diagram illustrating a configuration of a control system of the processor 31. The processor 31 reads programs from the storage 32 and develops the programs to the memory to thereby perform various functions. Specifically, the processor 31 functions as an object detector 34 and a robot processor 35.

The object detector 34 detects a target Wt from an image P taken by the three-dimensional camera 21. The object detector 34 specifies a position of the target Wt. Specifically, the object detector 34 primarily, that is, preliminarily, detects the target Wt in the image by using a detection model 44 trained by machine learning, and then limits an area based on the detected target Wt and performs a matching process, thereby secondarily, that is, finally, detecting the target Wt from the image.

The robot processor 35 controls a current applied to the servo motors of the robot arm 11 to adjust rotation angles of the joints 15, thereby moving the robot arm 11. The robot processor 35 also controls the actuators of the hand 12 to thereby open and close the hand 12. Specifically, the robot processor 35 controls the robot arm 11 and the hand 12 such that the target Wt detected by the object detector 34 is held by the hand 12 and conveyed.

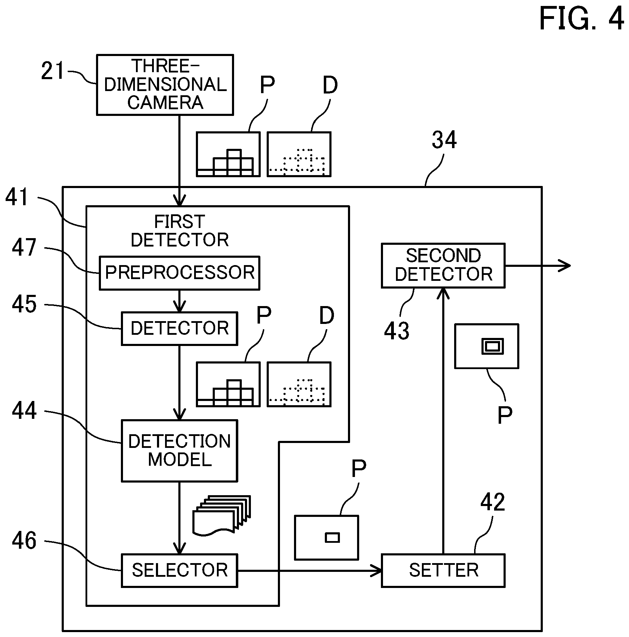

FIG. 4 is a further detailed functional block diagram of the object detector 34. The object detector 34 includes a first detector 41 that primarily detects the target Wt from the image P, a setter 42 that sets a search area A in the image P based on the target Wt primarily detected, and a second detector 43 that searches the search area A for the target Wt and secondarily detects the target Wt. The processor 31 reads and develops the object detection program 36 to thereby perform functions thereof.

The first detector 41 detects the target Wt by using the detection model 44 from the image P including objects W. The detection of the target Wt by the first detector 41 is also referred to as "primary detection." The detection model 44 is a model trained by machine learning, and is generated and stored in the storage 32 beforehand. The trained model is also called artificial intelligence (AI), a classifier, or a classification learner. The detection model 44 performs image recognition. Machine learning can use various known techniques, and is, for example, reinforcement leaning or deep learning.

For example, the detection model 44 includes a neural network. Specifically, the neural network is a convolutional neural network (CNN). The detection model 44 receives the image P and three-dimensional information D and detects, as an output, an object W included in the image P. In a case where multiple objects W are included in the image P, the detection model 44 can detect the objects W.

A detection result of the detection model 44 includes attributes of the objects W. Examples of the attributes of the objects W include positions of the objects W in the image P and the sizes of the objects W in the image P. In a case where the objects W are corrugated boxes, the position of each object W is defined by the positions, in the image P, of the four corners of a surface shown in the image P. The position in the image P refers to a position in a camera coordinate system that is a coordinate system defined with respect to the image P. The size of each object W includes the lengths of longer sides and shorter sides in the image P. The lengths of the longer sides and the shorter sides in the image P are expressed not by the lengths of longer sides and shorter sides of an actual corrugated box but by apparent lengths in the image P, such as the number of pixels.

It should be noted that since not only the image P and the three-dimensional information D is input to the detection model 44 in this example, the detection model 44 can also output information of the objects W with respect to the depth direction in the image P. For example, the detection model 44 can output information such as the positions of the objects W in the robot coordinate system, the normal to a surface of each object W, or the distance from the three-dimensional camera 21.

More specifically, the first detector 41 includes a detector 45 that detects objects W included in the image P by using the detection model 44, and a selector 46 that selects an object W as the target Wt from the objects W detected by the detector 45. The first detector 41 may further include a preprocessor 47 that performs a preprocess on the image P before the image P is input to the detector 45.

The preprocessor 47 performs a process on the image P such that the image P can be easily treated by the detection model 44. For example, the preprocessor 47 may adjust the image size, such as the number of pixels, of the image P to a predetermined value. The preprocessor 47 may adjust an aspect ratio of the image P to a predetermined ratio. The preprocessor 47 may adjust lightness of the image P. The preprocessor 47 may emphasize the edge of the image P. To emphasize the edge, the preprocessor 47 uses the three-dimensional information D as well as the image P. In emphasizing the edge, the image P may be compared with the three-dimensional information so that only edges of objects W that can be candidates for the target Wt can be extracted and emphasized. For example, in a case where objects W are arranged in the depth direction in the object storage 9 as illustrated in FIG. 1, the preprocessor 47 may regard only the object W on the front side, that is, close to the three-dimensional camera 21, as a candidate and emphasize only the edge of the object W on the front side. The preprocessor 47 may perform all or one or more of these adjustments or may perform image processing other than the adjustments described above.

The detector 45 inputs the image P to the detection model 44 and outputs a detection result by the detection model 44. In a case where the first detector 41 includes the preprocessor 47, the image P subjected to a preprocess is input to the detection model 44. The detection result of the detector 45 includes at least information on the positions of the objects W and information on the outer shapes of the objects W. Specifically, the detection result of the detection model 44 include attributes of the objects W such as the positions of the objects W and the sizes of the objects W. The positions of the objects W are the positions of the objects W in the image P, and the positions of the objects W in the camera coordinate system. In the example in which the objects W are corrugated boxes, the position of each object W is defined by the positions of the four corners of the surface shown in the image P in the camera coordinate system. In the example in which the objects W are corrugated boxes, the size of each object W is the lengths of longer sides and shorter sides, in the image P, of the surface shown in the image P. The sizes of the objects W correspond to information on outer shapes of the objects W. In a case where the image P includes multiple objects W, the detector 45 detects the objects W. That is, the detector 45 outputs attributes of the individual objects W.

The selector 46 selects the object W having a predetermined representative portion as the target Wt, from the objects W detected by the detector 45. Conditions for the representative portion are set beforehand. Examples of the conditions for the representative portion include a condition that it is a corner of an object W not adjacent to other objects W and a corner closest to a reference point in the image P. The reference point in the image P is, for example, the upper right corner of the frame in the image P. The object W having a corner satisfying such conditions is selected as the target Wt. In the case where multiple objects W are arranged in the depth direction in the object storage 9 as illustrated in FIG. 1, a condition that it is a corner of the object W on the front side closer to the three-dimensional camera 21, may be added as a condition for the representative portion.

In this example, the selector 46 selects the target Wt by using the three-dimensional information D. The selector 46 searches for a portion satisfying the conditions for the representative portion based on the three-dimensional information D, and specifies the representative portion. According to the conditions for the representative portion described above, the selector 46 specifies, as the representative portion, a corner that is a corner of a corrugated box on the front side, is not adjacent to other corrugated boxes and is closest to the upper right corner of the frame in the image P is specified as a representative portion. Since positions in the three-dimensional information D correspond to positions in the image P, in the three-dimensional information D, the position corresponding to the upper right corner of the frame in the image P is known.

Then, the selector 46 obtains the position of the representative portion specified in the three-dimensional information D in the image P based on the correspondence between the three-dimensional information D and the image P. The selector 46 extracts an object W having a corner at or near the position of the obtained representative portion in the image P, from the objects W detected by the detector 45. As described above, attribute information of each object W as the detection result of the detector 45 includes positions, in the image P, of the four corners of the object W shown in the image P. The selector 46 extracts an object W including the representative portion based on the detection result of the detector 45, and selects the extracted object W as the target Wt.

After the selector 46 selects the target Wt, the selector 46 extracts the size of the target Wt from the attribute information of the objects W detected by detector 45. The selector 46 creates, in the image P, a target model M corresponding to the target Wt based on the extracted size. Specifically, the selector 46 places one corner at the position of the representative portion in the image, and based on the lengths of longer sides and shorter sides of the extracted target Wt, creates, as the target model M, a rectangle having this corner in the image P.

The setter 42 sets, as the search area A, an area that includes the target Wt detected by the first detector 41 and is larger than the target Wt in the image P. Specifically, the setter 42 sets an area including the target model M and larger than the target model M as the search area A in the image P. In this example, the search area A is an approximately rectangle. The setter 42 creates the search area A by enlarging the target model M in four directions by predetermined widths. That is, the search area A has a size encompassing at least the target model M. For example, the height of the search area A is smaller than a dimension in which two targets Wt are placed in the top-bottom direction, and the width of the search area A is smaller than a dimension in which two targets Wt are placed in the left-right direction. The search area A is, of course, larger than the target Wt. That is, the search area A has a size reliably accommodating one target Wt and not accommodating two or more targets Wt.

The second detector 43 detects the target Wt by performing a matching process based on the search area A of the image P. The detection of the target Wt by the second detector 43 is also referred to as "secondary detection." For example, the matching process is pattern matching. The second detector 43 performs a matching process by using a two-dimensional template image in the search area A of the image P. The second detector 43 extracts an edge from the image P. The second detector 43 performs searching to determine whether the edge in the search area A includes a portion that matches with the template image, while enlarging and reducing the template image and/or changing the aspect ratio of the template image.

In this example, the second detector 43 creates the template image by using detection results in the primary detection. Specifically, the second detector 43 extracts the size, that is, the lengths of the longer sides and the shorter sides, of the target Wt from the attribute information of the objects W detected by the detector 45. Based on the extracted lengths of the longer sides and the shorter sides, the second detector 43 creates a template image of the rectangle. The second detector 43 performs a matching process by using the thus-created template image.

The second detector 43 detects a portion matching with the template image as the target Wt. The second detector 43 obtains the position of the target Wt in the robot coordinate system from the position of the target Wt in the image P based on the correspondence between the image P and the three-dimensional information D. The second detector 43 outputs the position of the target Wt in the robot coordinate system to the robot processor 35.

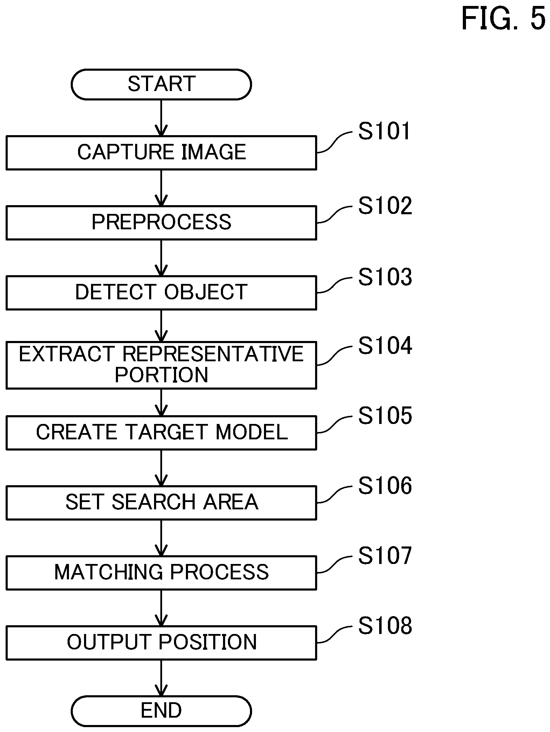

Next, a process of object detection will be described with reference to a flowchart. FIG. 5 is a flowchart of object detection. In this example, the objects Ware corrugated boxes. Thus, the objects W will also be referred to as corrugated boxes W, and the target Wt will also be referred to as a target corrugated box Wt.

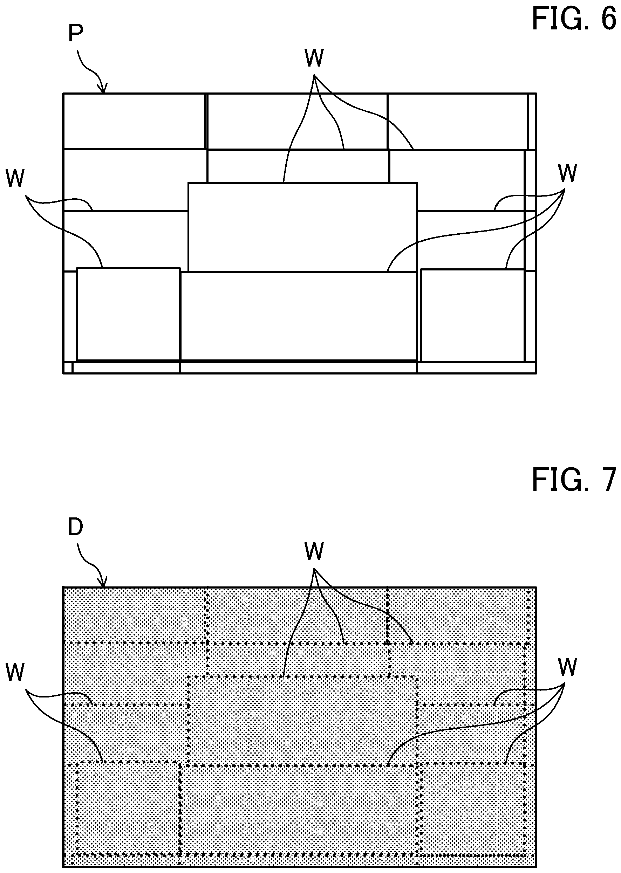

First, in step S101, the object detector 34 takes an image with the three-dimensional camera 21. Specifically, the object detector 34 causes the three-dimensional camera 21 to acquire an image P and three-dimensional information D. The three-dimensional camera 21 acquires an image P and three-dimensional information D of corrugated boxes W placed in the object storage 9. In this example, the three-dimensional information D is point group data. FIG. 6 shows an example of the image P including the corrugated boxes W. FIG. 7 shows an example of the three-dimensional information D including the corrugated boxes W. The three-dimensional camera 21 inputs the image P and the three-dimensional information D including the corrugated boxes W to the controller 3.

When the controller 3 receives the image P and the three-dimensional information D, the preprocessor 47 performs a preprocess on the image P in step S102. In this example, the preprocessor 47 adjusts the image size of the image P, the aspect ratio of the image P, and lightness of the image P. In addition, the preprocessor 47 emphasizes an edge of the image P by using the three-dimensional information D.

Next, in step S103, the object detector 34 detects boxes W included in the image P by using the detection model 44. At this time, the object detector 34 also outputs attribute information of the detected corrugated boxes W as a detection result.

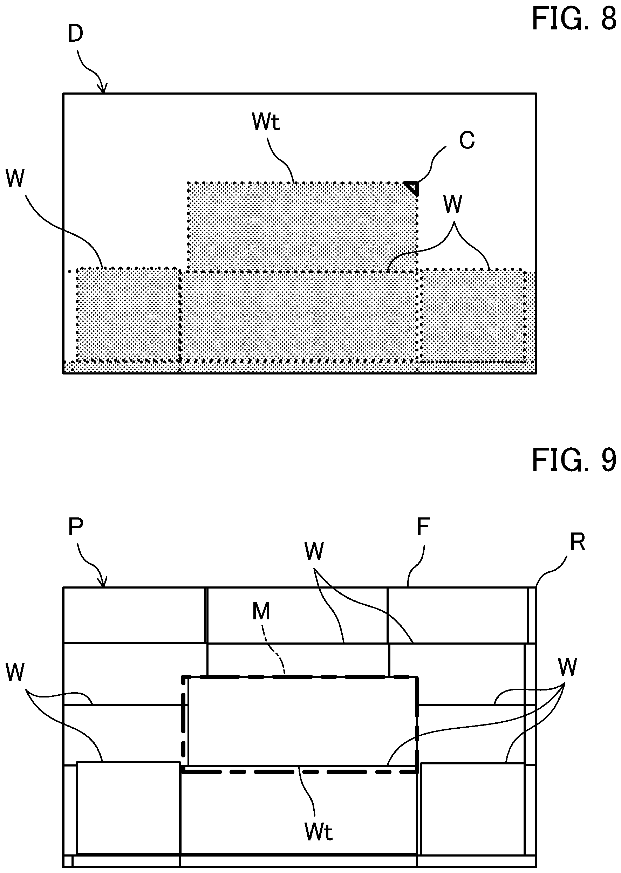

In step S104, the selector 46 extracts a representative portion C of the target corrugated box Wt from the three-dimensional information D and specifies the position of the representative portion C. FIG. 8 shows an example of the three-dimensional information D in which the representative portion C is specified. In the three-dimensional information D shown in FIG. 8, for convenience of description, corrugated boxes on the deep side, that is, on the side farther from the three-dimensional camera 21, are removed. In this example, conditions for the representative portion are that it is a corner of the corrugated box W on the front side, a corner of the corrugated box W not adjacent to the other corrugated boxes W, and a corner closest to a reference point R in the image P. The reference point R in the image P is the upper right corner of a frame F in the image P (see FIG. 9).

The selector 46 selects the corrugated box W including the representative portion C as the target corrugated box Wt based on the detection result of the object detector 34, that is, attribute information of the corrugated boxes W.

Thereafter, in step S105, the selector 46 creates a target model M corresponding to the target corrugated box Wt in the image P. The selector 46 creates the target model M by using attribute information of the target corrugated box Wt detected by the object detector 34. FIG. 9 is an example of the image P in which the target model M is created. In FIG. 9, the target model M is indicated by chain lines. The target model M can be shifted from the actual target corrugated box Wt in the image P in some cases depending on detection accuracy by the detection model 44. In a case where the normal to the plane of the target corrugated box Wt in the image P is not parallel to the optical axis of the three-dimensional camera 21, the shape of the target corrugated box Wt in the image P is slightly deformed from a rectangle. In such a case, the target model M is also shifted from the actual target corrugated box Wt in the image P.

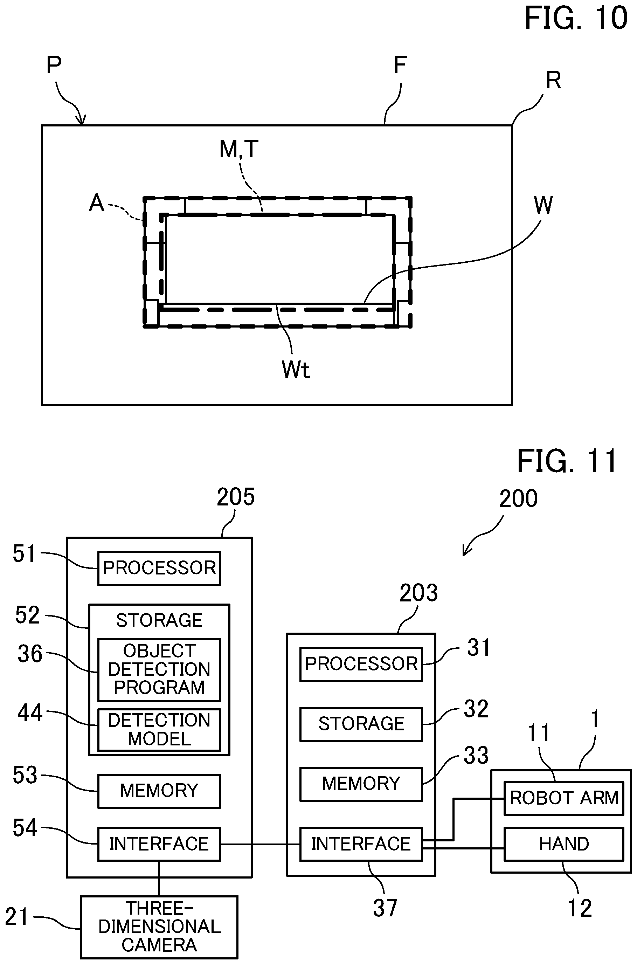

When the target model M is created, the setter 42 sets the search area A in the image P in step S106. In the image P, the setter 42 enlarges the target model M outward by a predetermined width and creates the search area A. FIG. 10 is an example of the image P in which the search area A is created. In FIG. 10, the search area A is indicated by bold broken lines. Since the target model M is a rectangle, the search area A has a substantially rectangular shape. A region outside the search area A is not used in the next matching process, and thus, is not shown in FIG. 10. Even in a case where the target model M is shifted from the actual target corrugated box Wt in the image P or a case where the target model M is smaller than the target corrugated box Wt, since the search area A is set by enlarging the target model M, the search area A includes the target corrugated box Wt with a high probability.

Subsequently, in step S107, the second detector 43 performs a matching process. The second detector 43 detects the target corrugated box Wt in the image P by performing a pattern matching in the search area A of the image P. As shown in FIG. 10, the matching process is performed not on the entire image P but on the search area A as a limited area. At this time, the second detector 43 creates a template image T based on the size, that is, the lengths of longer sides and shorter sides, of the target Wt detected by the detector 45. In this example, the template image T has the same outer shape and size as those of the target model M.

Thereafter, in step S108, the second detector 43 obtains the position of the target corrugated box Wt in the robot coordinate system, and outputs the position of the target corrugated box Wt in the robot coordinate system to the robot processor 35.

Based on the position of the target corrugated box Wt input from the object detector 34, the robot processor 35 controls the robot arm 11 and the hand 12 to thereby pick up the target corrugated box Wt from the object storage 9 and convey the target corrugated box Wt to a predetermined place.

In the manner described above, the controller 3 detects the target Wt in two stages. Specifically, the controller 3 primarily, that is, preliminarily, detects the target Wt by using the detection model 44, and then secondarily, that is, finally, detects the target Wt by the matching process. The primary detection is detection of the target Wt in the entire range of the image P. The detection range of the primary detection is large, and therefore, a large number of objects W are included in the detection range. Detection using the detection model 44 that is a trained model is suitable for detection of various types of objects W, as compared to detection by the matching process. The use of the detection model 44 for the primary detection eases detection of various types of objects W in a wide range. The objects Ware detected by using the detection model 44 and the target Wt is selected from the detected objects W so that the target Wt can be easily detected.

On the other hand, detection using the matching process enables detection of the target Wt with higher accuracy than detection using a trained model, while requiring time for detecting the target Wt from various types of objects W, which is not suitable for such a detection. In view of this, the search area A for performing a matching process is limited based on the target Wt detected by the primary detection. Specifically, the range for the matching process is limited to the search area A that includes the target Wt detected by the primary detection and is larger than the target Wt. By performing the matching process not in the entire range of the image P but in the limited search area A, the matching process can be appropriately performed without requiring much time. In addition, since the search area A is set based on the target Wt detected in the primary detection, the search area A can be set to a range including the target Wt. This ensures detection of the target Wt by the matching process.

As described above, a combination of the primary detection using the detection model 44 and the secondary detection using the matching process enables the target Wt in the image P to be detected easily and accurately.

Further, in setting the search area A, the setter 42 creates the target model M in the image P based on the detection result by the detection model 44 and sets the search range A in an area including the target model M and obtained by enlarging the target model M. Accordingly, even in a case where detection accuracy by the detection model 44 is not significantly high, the search area A reliably including the target Wt can be set.

Furthermore, the template image T for use in the matching process is created based on the detection result by the detection model 44. In a case where the image P can include various types of objects W, it is complicated to prepare template images T of the objects W of all the type beforehand. In the controller 3, even if template images are not prepared beforehand, template images T corresponding to the objects W included in the image P can be appropriately created by referring to the detection result by the detection model 44. By performing the matching process with the appropriate template image T, the process is easily performed, and in addition, matching accuracy is increased.

### OTHER EMBODIMENTS

In the foregoing description, the embodiment has been described as an example of the technique disclosed in the present application. The technique disclosed here, however, is not limited to this embodiment, and is applicable to other embodiments obtained by changes, replacements, additions, and/or omissions as necessary. Components described in the above embodiment may be combined as a new exemplary embodiment. Components provided in the accompanying drawings and the detailed description can include components unnecessary for solving problems as well as components necessary for solving problems in order to exemplify the technique. Therefore, it should not be concluded that such unnecessary components are necessary only because these unnecessary components are included in the accompanying drawings or the detailed description.

For example, the object detector is not limited to the controller 3 of the robot 1. That is, the object detector may not have the function of controlling the robot 1 as long as the object detector has the function of detecting objects W. For example, in the example of the robot system 100, the function of detecting objects W in the controller 3, that is, the object detector 34, may be obtained by a device different from the controller 3. FIG. 11 shows an example in which the object detector is obtained as a device different from the controller 3. FIG. 11 is a block diagram of a robot system 200 according to a variation. The robot system 200 includes a robot 1, an object detector 205, and a robot controller 203 that controls the robot 1 such that the robot 1 applies a treatment on a target Wt detected by the object detector 205.

The robot 1 has a configuration similar to that of the robot 1 of the robot system 100. The configuration of the robot controller 203 is basically similar to the configuration of the controller 3 of the robot system 100. The robot controller 203 includes a processor 31, a storage 32, and a memory 33 that are similar to those of the controller 3. The robot controller 203 further includes an interface 37. The controller 3 also includes an interface, although not described here. The object detector 205 includes a processor 51, a storage 52, a memory 53, and an interface 54. A basic configuration of the processor 51 is similar to that of the processor 31. A basic configuration of the storage 52 is similar to that of the storage 32. A basic configuration of the memory 53 is similar to that of the memory 33. The object detector 205 is connected to the interface 37 of the robot controller 203 through the interface 54. The three-dimensional camera 21 is connected to the object detector 205 through the interface 54. The object detector 205 detects the target Wt from the image P, and obtains the position of the target Wt in the robot coordinate system. The object detector 205 outputs the position of the target Wt in the robot coordinate system to the robot controller 203.

Specifically, the storage 52 of the object detector 205 stores an object detection program 36 and a detection model 44. The processor 51 reads the object detection program 36 from the storage 52 and develops the program to the memory 53 to thereby function as the object detector 34 described above. Specifically, the processor 51 functions as a first detector 41, a setter 42, and a second detector 43. The object detector 34 primarily, that is, preliminarily, detects a target Wt in the image P by using a detection model 44 trained by machine learning, and then limits an area based on the detected target Wt and performs a matching process, thereby secondarily, that is, finally, detecting the target Wt.

The processor 31 of the robot controller 203 reads a program from the storage 32 and develops the program to the memory 33 to thereby function as the robot processor 35 described above. It should be noted that the processor 31 does not function as the object detector 34. The processor 31 receives the position of the target Wt from the object detector 205. The robot processor 35 controls the robot 1 such that the robot 1 applies a treatment to the target Wt detected by the object detector 205. For example, the robot processor 35 controls the robot 1 such that the robot 1 holds and conveys the target Wt detected by the object detector 205.

As described above, the object detector 205 further includes the interface 54 connectable to the robot controller 203 that controls the robot 1. The robot system 200 includes the object detector 205, the robot 1, and the robot controller 203 that controls the robot 1 such that the robot 1 applies a treatment to the target Tw detected by the object detector 205. This configuration can also increase detection accuracy of the target Wt.

The interface 54 may be communicable with the robot controller 203, more specifically, the interface 37, through wires or wirelessly. The three-dimensional camera 21 may be connected to the robot controller 203, instead of the object detector 205. In this case, the image and three-dimensional information of the three-dimensional camera 21 can be transmitted to the object detector 205 through the robot controller 203.

A purpose of detection of objects W by the object detector may not be to control the robot 1. Specifically, detection results of obj ects by the object detector can be used for various purposes other than control of the robot 1.

The objects W detected by the object detector are not limited to corrugated boxes. Any objects can be a target of detection by the object detector. The objects W may be parts, such as cylinder blocks. The objects W may be bags accommodating powder or other substances.

The robot 1 is not limited to an industrial robot. The robot arm 11 is not limited to a vertical articulated robot arm. The robot arm 11 may be of a horizontal articulated type, a parallel link type, a Cartesian coordinate type, a polar coordinate type, or other types.

A treatment applied to the target Wt by the robot 1 is not limited to holding and conveyance. The treatment of the robot 1 may be a process such as grinding or coating.

The three-dimensional camera 21 may not be fixed. For example, the three-dimensional camera 21 may be attached to the robot arm 11. The two-dimensional image and the three-dimensional information may be acquired by different devices. The three-dimensional information is not limited to point group data. The three-dimensional information may be a distance image.

The detection model 44 is not limited to the model described above. The detection model 44 can be any model as long as the detection model 44 is a model trained by machine learning and an input to the detection model 44 is a two-dimensional image and an output from the detection model 44 is detection of objects included in the two-dimensional image and attribute information of the objects. For example, the detection model 44 may not use the three-dimensional information D as an input, and may use a two-dimensional image as an input and detect objects W from the two-dimensional image.

The method for selecting the target Wt from objects W after the detection model 44 detects the objects W is not limited to the method by the selector 46. That is, the three-dimensional information D may not be used in selecting the target Wt. For example, the target Wt may be selected based on attribute information of the objects W detected by the detection model 44. In a case where the attribute information as a detection result includes the positions of the objects W, a positional relationship among the objects W becomes clear. The target Wt can be selected based on the positional relationship among the objects W. For example, based on the positional relationship among the objects W, a corrugated box on which other corrugated boxes are no placed may be extracted and used as a target corrugated box. In particular, in a case where objects Ware not arranged in the depth direction, the three-dimensional information is not needed.

The method for the matching process is merely an example. The matching process may be a process other than template matching. The template image may not be created by using the detection result by the detection model 44 and may be stored in the storage 32 beforehand. For example, the template image may be created from design data beforehand.

A target of the matching process by the second detector 43 is not limited to the image P, that is, a two-dimensional image. For example, the second detector 43 may perform the matching process on three-dimensional information corresponding to the image P. That is, the setter 42 further sets a three-dimensional search area B in the three-dimensional information D corresponding to the image P, from the search area A of the image P. The second detector 43 may detect the target Wt by performing a matching process in the three-dimensional search area B of the three-dimensional information D. The three-dimensional search area B is a stereoscopic space.

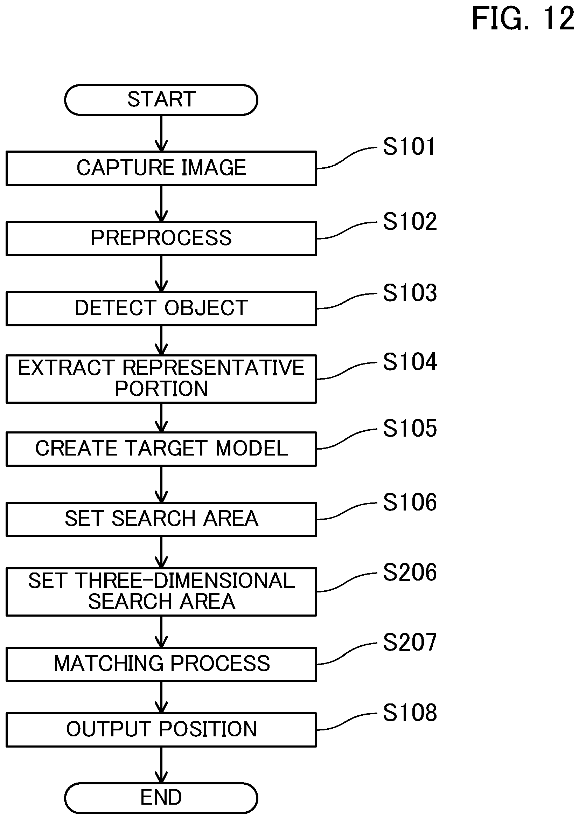

Object detection in which the matching process is performed in the three-dimensional search area B will be described with reference to FIG. 12. FIG. 12 is a flowchart of object detection according to a variation. Processes in steps S101 through S106 in FIG. 12 are the same as the processes in steps S101 through S106 of obj ect detection in FIG. 5. In the object detection according to the variation, the setter 42 sets the search area A in the image P in step S106, and then sets the three-dimensional search area B in the three-dimensional information D from the search area A of the image P in step S206. Since positions in the image P correspond to positions in the three-dimensional information D, a two-dimensional position of the search area A in the three-dimensional information D becomes clear. The setter 42 moves the thus-obtained two-dimensional search area A in the three-dimensional information D in parallel by a predetermined distance in the depth direction, and sets the three-dimensional search area B as a three-dimensional space. For example, the predetermined distance can be set at a distance longer, by a predetermined length, than a depth dimension of an object W whose depth dimension is the largest among the objects W that can be candidates for the target Wt.

Thereafter, in step S207, the second detector 43 performs a matching process. The second detector 43 performs pattern matching in three dimensions in the three-dimensional search area B of the three-dimensional information D to thereby detect the target corrugated box Wt in the three-dimensional information D. At this time, the second detector 43 creates and employs a three-dimensional template image from design data of the target Wt, such as three-dimensional CAD data. Three-dimensional CAD data of various objects W is stored in storage 32 beforehand. The second detector 43 reads the three-dimensional CAD data of the target Wt from the storage 32 and creates the three-dimensional template image.

In this manner, the second detector 43 performs a matching process based on the search area A.

Regarding the method for creating the three-dimensional search area B from the search area A, the predetermined distance in moving the search area A in the depth direction in the three-dimensional information D may be determined based on the three-dimensional CAD data of the target Wt. For example, a distance obtained by enlarging the depth dimension in the three-dimensional CAD data of the target Wt by a predetermined length may be set as the predetermined distance.

A preprocess of an image before the detection model 44 detects the target Wt is not necessary. The preprocess is a process for easing detection by the detection model 44 and, thus, may not be performed.

The flowchart is merely an example. The steps in the flowchart may be changed, replaced, added, omitted, or the like as appropriate. Further, the order of the steps in the flowchart may be changed, or serial processing may be performed in parallel. For example, as described above, the preprocess in step S102 may be omitted. The extraction of the representative portion in step S104 may be performed before the object detection in step S103 or may be performed in parallel with the object detection in step S103.

Functions performed by constitutional elements described herein may be implemented in circuitry or processing circuitry including a general-purpose processor, an application-specific processor, an integrated circuit, an application specific integrated circuit (ASIC), a central processing unit (CPU), conventional circuitry, and/or a combination thereof programmed to perform the functions described herein. A processor includes transistors and other circuits, and is regarded as circuitry or arithmetic circuitry. A processor may be a programmed processor that performs programs stored in a memory.

Circuitry, a unit, and means herein are hardware that is programmed to perform or performs the described functions. The hardware may be any hardware disclosed herein, or any hardware programmed or known to perform the functions described.

If the hardware is a processor considered to be of a type of circuitry, the circuitry, means, or a unit is a combination of hardware and software used to configure the hardware and/or the processor.
[1] A controller 3 (object detector) includes: a first detector 41 that detects a target Wt from an image P including objects W, by using a detection model 44 trained by machine learning; a setter 42 that sets, as a search area A, an area that includes the target Wt detected by the first detector 41 from the image P and is larger than the target Wt; and a second detector 43 that detects the target Wt by performing a matching process based on the search area A of the image P.

With this configuration, since the target Wt is primarily detected from the image P by using the detection model 44 as a trained model, the target Wt can be easily detected from a wide range of the image P that can include various types of objects W. Then, the search area A including the target Wt and larger than the target Wt is set in the image P and the area in which the matching process is performed is limited so that detection accuracy of the target Wt can be thereby increased. The detection of the target Wt using the detection model 44 is first performed, and then, using the result of the detection, the target Wt is detected by the matching process. Accordingly, it is possible to detect the objects W and the target Wt appropriately while utilizing advantages of both the detection using the detection model 44 and the detection using the matching process.

[2] In the controller 3 of [1], the first detector 41 includes a detector 45 that detects objects W included in the image P, by using the detection model 44, and a selector 46 that selects an object W as the target Wt from the objects W detected by the detector 45.

With this configuration, after the detector 45 detects the objects W from the image P by using the detection model 44, the selector 46 selects the target Wt from the detected objects W. The detection model 44 as a trained model has the advantage of easily detecting multiple types of objects W. This advantage of the detection model 44 is utilized to detect the objects W from the image P. The selection of the target Wt from the objects W is conducted by the selector 46.

[3] In the controller 3 of [1] or [2], the detector 45 outputs information on positions of the objects W and information on outer shapes of the objects W, as a detection result of the objects W, the selector 46 creates a target model M corresponding to the target Wt in the image P, based on the information on the position and the information on the outer shape of the object W selected as the target Wt, and the setter 42 sets, as the search area A, an area that includes the target model M in the image P and is larger than the target model M.

With this configuration, the target model M is created based on the detection result of the detector 45. Since the detection result of the detector 45 is obtained by using the detection model 44, the target model M created in the image P can include some error from the actual target Wt in the image P. By setting the area including the target model M and larger than the target model M as the search area A, the search area A can be set to reliably include the actual target Wt in the image P.

[4] In the controller 3 of any one of [1] to [3], the selector 46 extracts a representative portion C of the target Wt in three-dimensional information D corresponding to the image P and selects, as the target Wt, an object W including the representative portion C from the objects W detected by the detector 45.

With this configuration, since the representative portion C of the target Wt is extracted based on the three-dimensional information D, extraction accuracy of the representative portion C can be increased. Since the target Wt is selected from the objects W based on the representative portion C extracted with high accuracy, accuracy in selecting the target Wt can be increased.

[5] In the controller 3 of any one of [1] to [4], the detector 45 outputs the information on the outer shapes of the objects W as a detection result of the objects W, and the second detector 43 creates a template image T based on the information on the outer shape of the target Wt and performs a matching process by using the template image T.

With this configuration, no template images need to be prepared beforehand, and the template image T is created in performing the matching process. In addition, the template image T is created based on the detection result of the object W by the detector 45. Since the detection result includes the information on the outer shape of the object W, the template image T is created to correspond to the outer shape of the object W. By performing the matching process with the template image T of a shape corresponding to the outer shape of the object W, the process is easily performed, and in addition, matching accuracy is increased.

[6] In the controller 3 of any one of [1] to [5], the second detector 43 detects the target Wt by performing the matching process in the search area A of the image P.

With this configuration, the second detector 43 performs the matching process in two dimensions in the search area A of the image P that is a two-dimensional image. Accordingly, the second detector 43 can detect the target Wt from the image P.

[7] In the controller 3 of any one of [1] to [6], the setter 42 sets a three-dimensional search area B in three-dimensional information D corresponding to the image P, from the search area A of the image P, and the second detector 43 detects the target Wt by performing a matching process in the three-dimensional search area B of the three-dimensional information D.

With this configuration, even in a case where the second detector 43 performs secondary detection with a three-dimensional matching process, detection accuracy of the target Wt can be increased by performing the matching process not in the entire three-dimensional information D but in the limited three-dimensional search area B.

[8] The controller 3 of [1] to [7], that is, the object detector, further includes an interface 54 connectable to a robot controller 203 that controls a robot 1.

Even this configuration can increase detection accuracy of the target Wt.

[9] A robot system 100 includes: the controller 3 (object detector) of any one of [1] to [8]; a robot 1; and a controller 3 (robot controller) that controls the robot 1 such that the robot 1 applies a treatment to the target Wt detected by the controller 3.

With this configuration, since the target Wt is primarily detected from the image P by using the detection model 44 as a trained model, the target Wt can be easily detected from a wide range of the image P that can include various types of objects W. Then, the search area A including the target Wt and larger than the target Wt is set in the image P and the area in which the matching process is performed is limited so that detection accuracy of the target Wt can be thereby increased. The detection of the target Wt using the detection model 44 is first performed, and then, using the result of the detection, the target Wt is detected by the matching process. Accordingly, it is possible to detect the objects W and the target Wt appropriately while utilizing advantages of both the detection using the detection model 44 and the detection using the matching process.

[10] An object detection program 36 that causes a controller 3 (computer) to perform the functions of: detecting a target Wt from an image P including objects, by using a detection model 44 trained by machine learning; setting, as a search area A, an area that includes the target Wt detected by using the detection model 44 from the image P and is larger than the target Wt; and detecting the target Wt by performing a matching process based on the search area A of the image P.

With this configuration, since the target Wt is primarily detected from the image P by using the detection model 44 as a trained model, the target Wt can be easily detected from a wide range of the image P that can include various types of objects W. Then, the search area A including the target Wt and larger than the target Wt is set in the image P and the area in which the matching process is performed is limited so that detection accuracy of the target Wt can be thereby increased. The detection of the target Wt using the detection model 44 is first performed, and then, using the result of the detection, the target Wt is detected by the matching process. Accordingly, it is possible to detect the objects W and the target Wt appropriately while utilizing advantages of both the detection using the detection model 44 and the detection using the matching process.

## Claims

1. An object detector comprising:
a first detector that detects a target from an image including objects, by using a detection model trained by machine learning;
a setter that sets, as a search area, an area that includes the target detected by the first detector from the image and is larger than the target; and
a second detector that detects the target by performing a matching process based on the search area of the image.

2. The object detector according to claim 1, wherein
the first detector includes
a detector that detects objects included in the image, by using the detection model, and
a selector that selects an object as the target from the objects detected by the detector.

3. The object detector according to claim 2, wherein
the detector outputs information on positions of the objects and information on outer shapes of the objects, as a detection result of the objects,
the selector creates a target model corresponding to the target in the image, based on the information on the position and the information on the outer shape of the object selected as the target, and
the setter sets, as the search area, an area that includes the target model in the image and is larger than the target model.

4. The object detector according to claim 2, wherein
the selector extracts a representative portion of the target in three-dimensional information corresponding to the image and selects, as the target, an object including the representative portion from the objects detected by the detector.

5. The object detector according to claim 2, wherein
the detector outputs the information on the outer shapes of the objects as a detection result of the objects, and
the second detector creates a template image based on the information on the outer shape of the target and performs a matching process by using the template image.

6. The object detector according to claim 1, wherein
the second detector detects the target by performing the matching process in the search area of the image.

7. The object detector according to claim 1, wherein
the setter sets a three-dimensional search area in three-dimensional information corresponding to the image, from the search area of the image, and
the second detector detects the target by performing a matching process in the three-dimensional search area of the three-dimensional information.

8. The object detector according to claim 1, further comprising
an interface connectable to or communicable with a robot controller that controls a robot.

9. A robot system comprising:
the object detector according to any one of claims 1 to 8;
a robot; and
a robot controller that controls the robot such that the robot applies a treatment to the target detected by the object detector.

10. An object detection program that causes a computer to perform the functions of:
detecting a target from an image including objects, by using a detection model trained by machine learning;
setting, as a search area, an area that includes the target detected by using the detection model from the image and is larger than the target; and
detecting the target by performing a matching process based on the search area of the image.
